# EUROPEAN PATENT APPLICATION

(11) **EP 0 854 553 A2**
(43) Date of publication of application: **22.07.1998**
(21) Application number: 98300374.0
(22) Date of filing: 20.01.1998
(51) Int. Cl.: H02G 1/12, B24C 3/12

(54) **Apparatus for stripping a coating from a wire**

(30) Priority: 20.01.1997 GB 9701079
(71) Applicant: Ciniglio, Alexander James, Great Dunmow, Essex CM6 1JH (GB); Hall, Larry, Palatine, Illinois 60067 (US)
(72) Inventor: Ciniglio, Alexander James, Great Dunmow, Essex CM6 1JH (GB); Hall, Larry, Palatine, Illinois 60067 (US)
(74) Representative: Luckhurst, Anthony Henry William

(57) **Abstract**

A wire stripping apparatus 1 has an angled wall 22 for directing the waste particle stream from a nozzle 18 towards a suction outlet 24. 26. This improves the evacuation of particles from the chamber, reducing the build up of a back pressure.

A guide tube 10 is telescopic so that the tube can be extended to bridge the chamber 2 to facilitate threading of a wire through the device and also to control the stripping operation by protecting the wire from the particle stream.

A bleed opening 66 in the wall of the chamber 2. near the nozzle 18. sets up a through draft towards the suction outlet 24, 26.

## Description

The present invention relates to an apparatus for stripping a coating from a wire and in particular to an apparatus for stripping an enamel insulation coating from a copper wire which is being fed to a coil winding station.

EP-A-712 187 describes a method and apparatus in which the wire is passed through a chamber and subjected to a stream of abrasive particles to abrade or chip the enamel coating from the wire. The chamber is evacuated to remove the abrasive particles and enamel chippings, ensuring that there is no contamination of the surrounding environment. Thus EP-A-712 187 provides a system which can be used in close proximity to a coil winding machine without fear of contaminating the coil winding machine.

A first aspect of the present invention provides an apparatus for stripping a coating from a wire, the apparatus comprising a chamber having a path for the passage of a wire through the chamber, an inlet nozzle for directing a stream of abrasive material onto the wire to strip a coating from the wire, and an outlet for connection to a suction device, wherein means is provided for directing the stream of abrasive material towards the outlet after the stream has impinged on the wire.

Preferably the directing means is formed by providing an angled chamber. A first arm of the chamber contains the wire path, and the inlet nozzle is provided near one end of the arm and directed generally towards a second arm of the chamber. A suction pump is connected to an outlet at a distal end of the second arm. Thus the momentum of the particle stream helps to carry the particles towards the suction outlet.

Preferably the wire path is a straight line path along an axial direction of the first arm, and an axial direction of the second arm subtends an angle of between about 20° and 40° to the first arm, and preferably about 30°.

Preferably a plurality of inlet nozzles are provided, the particle streams exiting from the nozzles to impinge on the wire at the same general location. Preferably the streams subtend an angle of less than 45 degrees with the wire, and very preferably less than 30 degrees, in order to reduce roughness of the stripped wire surface and reduce the likelihood of particles being embedded in the surface of the stripped wire.

When a wire breaks or the wire is to be changed, re-threading of the wire stripping apparatus can be difficult and time consuming, particularly with very fine wires.

Another aspect of the invention provides a wire stripping apparatus comprising a chamber having a through path for the passage of a wire, wherein the path includes a guide tube which is movable between a first open position for exposing the wire to a stream of abrasive particles, and a second closed position in which the tube bridges the chamber.

Thus, the tube can be moved to the closed position to facilitate threading of the wire through the chamber. The use of the movable guide tube has a second advantage. It has been found that at start-up of the air stream for the abrading operation there is an initial surge of abrasive particles which can abrade or damage the wire surface.

Thus the tube is held in the closed position at the initial start-up of the abrading operation.

On shut down, there is not a sharp shut off of the abrasive particle stream, and so there is not a precise end to a stripped region of the wire. This can be overcome by closing the tube when the requisite length of wire has been abraded.

Thus, another aspect of the invention provides a method of removing a coating from a wire, comprising passing the wire through a tube, directing a stream of abrasive particles onto the tube, moving the tube to an open position to expose the wire to the stream of particles, and moving the tube to a closed position to prevent the abrasive particles impinging on the wire.

Preferably the tube has a transverse aperture for directing a stream, of air across the tube to prevent abrasive particles escaping from the chamber along the tube.

According to yet another aspect of the present invention, a wire stripping apparatus comprises a chamber having a path therethrough for the passage of a wire, an inlet for a stream of abrasive particles which impinges on a said wire to strip a coating from the wire, and an outlet connected to a suction device, wherein the chamber wall has an opening therein for bleeding air into the chamber. Preferably the opening is positioned near the inlet nozzle.

By providing a bleed aperture, a draft of air through the chamber can be set up by the suction device, to improve the movement of abrasive particles towards the outlet. A further advantage is that the stripping operation can be observed through the bleed aperture. It is difficult to use a transparent cover for observation because over time it will become clouded under the action of abrasive particles.

The invention will be further described by way of example with reference to the accompanying drawings, in which:
Figure 1 is a cross-section through a wire stripping apparatus forming a first embodiment of the invention and Figure 1a is a detail on circle A of Figure 1;
Figure 2 is a side view of the apparatus for Figure 1;
Figure 3 is a plan view of a bank of the apparatus of Figure 1;
Figure 4 is a schematic view of the embodiment of Figure 1 in a coil winding machine;
Figure 5 shows a modification of the embodiment of figure 1, and
Figure 6 shows a further modification of the embodiment of figure 1.

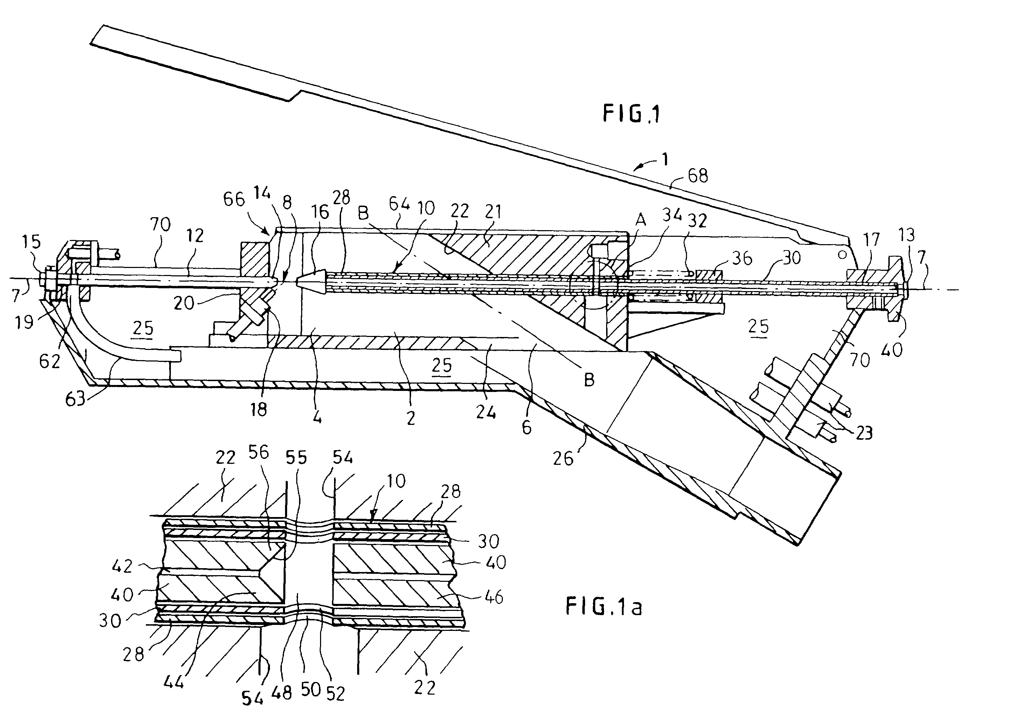

Referring to figure 1, a wire stripping apparatus 1 forming an embodiment of the invention comprises an angled inner chamber 2 which has a first arm 4 and a second arm 6 at an angle to the first arm 4. A wire 7 extends along a wire path through the first arm 4 between an inlet guide tube 10 and an outlet guide tube 12. The wire is fed through ceramic eyes 13, 15 at the inlet and outlet ends 17, 19, respectively of the tubes 10, 12. A gap 8 is formed between opposed ends 14, 16 of the guide tubes 10, 12. The guide tube 10 is telescopic so that the gap 8 between the tube ends 14, 16 can be closed to thread wire through the apparatus and to protect the wire during starting and stopping of the abrading operation.

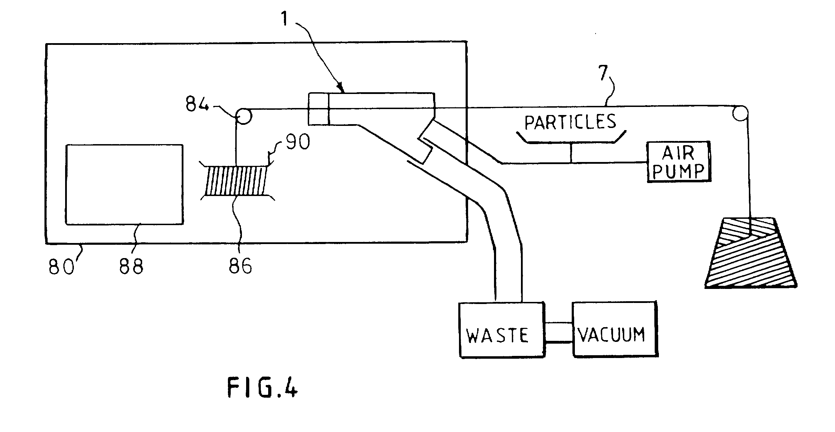

Three inlet nozzles 18 (only one is shown in the drawings) are housed in an end wall 20 of chamber 2 and spaced at 120° around the wire path to direct a stream of abrasive particles onto the wire 7, which passes from right to left through the apparatus as viewed in figure 1. The nozzles 18 are coupled to respective inlet ports 23 which are in turn fed with a pressurised stream of abrasive particles (see Fig. 4).

If the particle stream from the nozzle impinges on the wire at an angle close to the perpendicular, there is a tendency for abrasive particles to be embedded in the wire, and the surface finish of the wire can be very coarse. Both these conditions can decrease the solderability of the wire. Thus it is particularly preferred that the nozzles subtend an angle less than 45 degrees to the wire, and very preferable less than 30 degrees. Below about 15 degrees the abrading action of the particles is relatively inefficient and so an angle of from about 30 down to about 15 degrees is preferred. Interchangeable nozzle assemblies may be provided, allowing different angles to be used for making adjustments to suit the particle type, wire coating type, etc.

The end 16 of guide tube 10 is conical to reduce any back pressure caused by turbulence as the abrasive particle streams impinge on the wire 7.

Opposite the end wall 20, the first arm 4 has an end wall 21 having a surface 22 sloping at 30 degrees to the wire path. The wall is arcuate to the wire path. and conveniently is formed by machining a circular bore along the axis B-B. The outlet 24 of the second arm 6 is aligned with a suction tube 26 which is connected to a suction device (not shown in figure 1). The suction tube 26 is of slightly greater diameter than the outlet 24, and serves to evacuate the space 25 surrounding the chamber 2 as well.

Referring to Figure 1a, the guide tube 10 comprises an outer tube 28 which is fixed in place in the guide wall 22 and extends in the axial direction of the first arm 4 of the chamber 2. An intermediate tube 30 slides in the outer tube 28. Conical tube end 16 is fixed on the end of the intermediate tube 30 and overlaps the outer tube 28, to prevent particles entering between the tubes 28, 30. A spring 32 is positioned between the outer surface 34 of the wall 21 and a stop 36 on the intermediate tube 30 to bias the tube 30 to the open position, as shown in figure 1. The other end 17 of the intermediate tube 30 carries a knob 40 which is pushed against the bias of spring 32, to move the tube ends 16, 14 together, for threading a wire through the apparatus.

An inner tube 40 is a tight fit within the intermediate tube 30 and has a narrow bore 42 for guiding the wire 7. The inner tube 40 is in two halves 44, 46 which are spaced apart to form a cross-passage 48. Passage 48 aligns with cross-bores 50, 52 in the tubes 28, 30 and a bore 54 in wall 22. An air-stream is fed through the bore 54 so that any particles entering tube 40 are evacuated via outlet 24, 26. The intermediate tube 40 is in two halves so that a conical surface 55 can be formed in the end 56 of the tube 44 to guide the wire 7 into the tube half 44 as it is fed across the gap 48.

Adjacent the wire exit end another air stream is fed through a passage 62, transverse to the wire 7 to remove any abrasive particles or coating chippings which are stuck to the wire 7. The passage 62 includes a tube 63 to lead the waste airstream towards the main suction outlet 26.

The chamber 2 has a cover 64 which leaves a small opening or bleed aperture 66 adjacent the end wall 20. This helps create an air flow through the chamber 2 to the outlet 24, 26.

A second cover 68 is hinged to the outer walls 70.

In use, the wire 7 passes substantially continuously through the wire stripping apparatus, from a coil 79 to a winding machine 80 (see Fig. 4). To feed the wire 7 through the wire stripping apparatus at start-up, after a breakage, etc, the end 16 of the tube 30 is pushed against the end 14 of the tube 12 to close the gap 8, and wire is threaded through the device. The tube 30 can be released during coil winding.

When a length of the wire 7 is to be stripped of its enamel coating, the abrasive particle stream is started. The wire 7 is drawn through the tubes 10, 12 to strip a length of the wire. When the required length has been stripped, the particle stream is stopped.

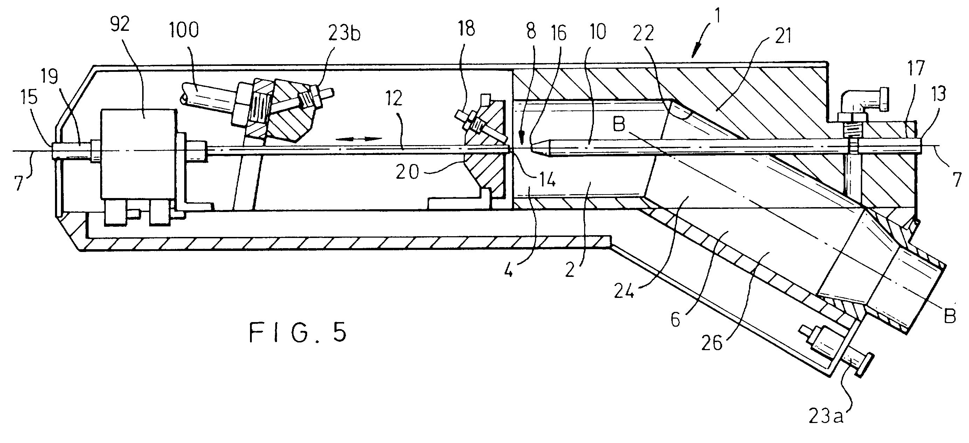

As mentioned above, on the start up of the particle stream there may be a surge of particles which may degrade the wire surface, and the shut down of the stream is not precise so that a sharp finish to the stripped region is not obtained. Figure 5 shows a modification of the embodiment of figure 1, in which the gap 8 between the tubes 10, 12 is closed during coil winding and is opened to expose the wire to the particle stream. In figure 5, the parts which are the same or similar to parts in figure 1 have been given like reference numerals. In the arrangement of figure 5, the tube 12 slides in the end wall 20, which carries the nozzles 18. to open and close the gap 8 between the tube ends 14, 16. The tube is moved by an air cylinder 92. During coil winding the tube 12 is moved to close the gap 8 and abut the end 16 of the tube 10. To perform a stripping operation, the particle stream is started and the tube 12 is slid to the left, as seen in the drawing, to open the gap 8 and expose the wire to the particle stream shortly after the stream has started. When the required length of the wire has been stripped, the tube is moved to close the gap 8 and the particle stream then turned off.

It will be appreciated that it is no longer necessary to provide for movement of tube 10 to bridge the gap 8 for threading the wire, since this can be done by moving the tube 12. although it may still be preferred to retain this manual control. Also the tube 10 may be acted on by an air cylinder, tube 12 being fixed, to close and open the gap 8 when stripping the wire.

Instead of moving the tube 10 or 12, a shield or other device may be moved between the wire and the nozzles 18.

Also shown in figure 5 is a single inlet port 23a for the stream of abrasive particles. A feed line 100 delivers the particle stream to a manifold 23b which divides the stream into three to deliver it to the three nozzles 18.

In use, the wire stripping apparatus can be fully automated and microprocessor controlled.

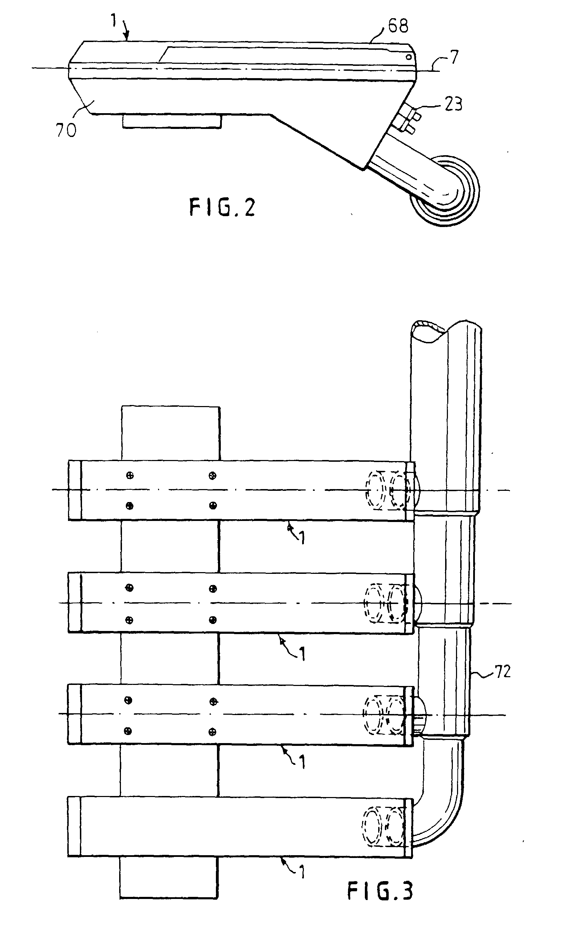

In figure 3, several wire stripping apparatus 1 are mounted in parallel for operation with a coil winding machine having several coil winding stations. A single vacuum source is connected to the apparatus 1 by a manifold 72.

Figure 4 shows schematically a coil winding machine 80 incorporating a wire stripping device 1 of the invention. Wire 7 is fed through the device 1 and then via pulley wheel 84 to a bobbin 86 mounted on the winding station 88.

In use a region of the wire 7 is stripped by the apparatus 82 and is then fed through to a tag 90 on the bobbin 86 and wrapped around the tag 90. Since the distance between the tag 90 and apparatus 82 is fixed, the stripped region of the wire 7 can be easily positioned automatically around the tag 90. The bobbin 86 is then wound and a further region of the wire 7 is stripped for winding around a second tag.

An independent wire feed device may be employed to feed the wire 1 through the stripping device during the stripping operation rather than using the coil winder feed. A reserve of wire could be provided for this, and kept under tension during the winding operation.

Figure 4 shows schematically an air pump for producing a flow of pressurised air and a reservoir for abrasive particles such as 75 µm crushed glass. Such apparatus for delivering a pressurised stream is well known in the art. The particles are fed into the stream of pressurised air and directed to the wire stripping apparatus. The outlet 26 of the apparatus is fed to a waste chamber for collecting waste particles. In the embodiment a vacuum pump is applied to the line to the waste chamber.

Various modifications may be made to the described embodiments. For example, the guide face 22 may be curved in the plane of the wire path, providing an arcuate transition from the arm 4 to the main suction outlet 26.

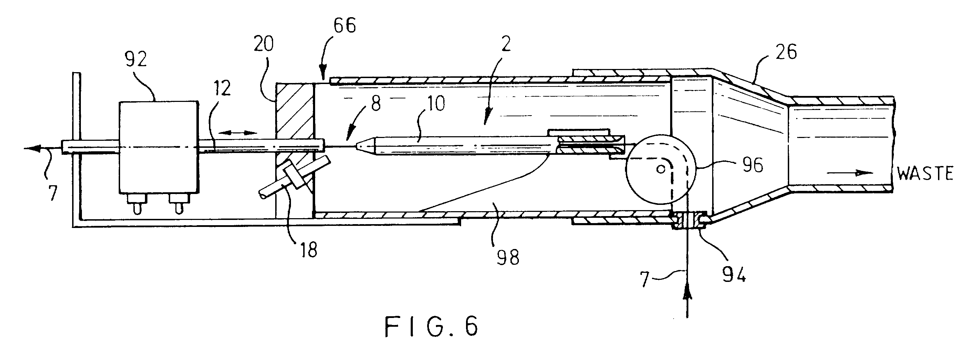

Although it is preferable to provide a straight line path through the stripping apparatus, the chamber 2 could be straight, with the wire being angled. Figure 6 shows such an embodiment. Here the wire path 7 passes into the chamber 2 through a side wall 94, and turns around a pulley 96. A pulley support 98 protects the pulley 96 and its bearings from the stream of particles which exit through the waste duct 26.

## Claims

1. Apparatus for stripping a coating from a wire, the apparatus comprising a chamber having a path for the passage of a wire through the chamber, an inlet nozzle for directing a stream of abrasive material onto the wire to strip a coating from the wire, and an outlet for connection to a suction device, wherein means is provided for guiding the stream of abrasive material towards the outlet after the stream has impinged on the wire.

2. Apparatus as claimed in claim 1, wherein the chamber is shaped to guide the waste material.

3. Apparatus as claimed in claim 2, wherein the outlet is angled at between 140 and 160 degrees to the wire path in the region where the coating is removed.

4. Apparatus as claimed in claim 3, wherein the angle is 150°.

5. Apparatus as claimed in claim 1, wherein the guide means comprises an angled wall downstream of the direction of travel of the abrasive particles.

6. Apparatus as claimed in claim 1, wherein the chamber is angled, the wire passing through a first arm of the chamber. with the inlet nozzle at the free end of the arm, and the outlet being positioned at the free end of the other arm.

7. Apparatus as claimed in claim 6, wherein the chamber arms subtend an angle of about 140 to 160 degrees.

8. Apparatus as claimed in claim 7, wherein the angle is about 150 degrees.

9. Apparatus for stripping a coating from a wire, the apparatus having a chamber having a through path for the passage of a wire, wherein the path includes a guide tube which is movable between a first open position for exposing the wire to a stream of abrasive particles, and a second closed position.

10. Apparatus as claimed in claim 9, wherein in the closed position the tube protects the wire from the stream of abrasive particles.

11. Apparatus as claimed in claim 10, wherein in the closed position the tube bridges the chamber.

12. Apparatus for stripping a coating from a wire, the apparatus comprising a chamber having a path therethrough for the passage of a wire, an inlet for a stream of abrasive particles with impinges on the wire to strip a coating from the wire, and an outlet connected to a suction device, wherein the chamber wall has an aperture therein for bleeding air into the chamber.

13. Apparatus as claimed in claim 12, wherein the aperture is provided near the inlet nozzle.

14. A method of removing a coating from a wire, comprising passing the wire through a tube, directing a stream of abrasive particles onto the tube, moving the tube to an open position to expose the wire to the stream of particles, and moving the tube to a closed position to prevent the abrasive particles impinging on the wire.

15. A method of stripping a coating from a wire by means of a stream of abrasive particles which impinge on the wire coating, wherein the wire is drawn through the particle stream, and means is provided to protect the wire from the particle stream at the start and/or end of a stripping operation.
